# EUROPEAN PATENT SPECIFICATION

(11) **EP 4 095 218 B1**
(45) Date of publication and mention of the grant of the patent: **02.10.2024**
(21) Application number: 21175776.0
(22) Date of filing: 25.05.2021
(51) Int. Cl.: C10L 5/40

(54) **POWDERY ALTERNATIVE FUEL**
PULVERFÖRMIGER ALTERNATIVER KRAFTSTOFF
COMBUSTIBLE ALTERNATIF EN POUDRE

(43) Date of publication of application: 30.11.2022
(73) Proprietor: Subcoal International B.V., 5854 PC Nieuw - Bergen (NL)
(72) Inventor: JENNISSEN, Lars, 5854 AM Nieuw Bergen (NL)
(74) Representative: Hoyng Rokh Monegier B.V.

(56) References cited:
- EP-A1- 1 083 212
- WO-A1-2020/127473
- DE-A1- 3 034 958

## Description

### TECHNICAL FIELD

The invention relates to a powdered alternative fuel, a process for preparing such powdery alternative fuel from waste materials, and to uses thereof.

### BACKGROUND ART

Municipal waste remains a substantial problem. Waste is now generally sorted, and valuable fractions are selected. Yet, recycling is difficult because of the many different constituents, present in varying amounts. Furthermore, mixed waste streams like mixtures of plastic and paper (or generally cellulose fibers) is a light fraction for which a suitable outlet remains a challenge.

One of the uses of such light fraction is its use as alternative fuel, also named secondary fuel. The cheapest way to use this fraction is as obtained after sorting. This fraction is fluffy material; therefore its name: fluff. Fluff is difficult to transport (unless baled, but then it is difficult to obtain fluffy fraction that can be used as fuel). Another drawback of fluff is, that it is very heterogeneous, such that it can be burned only in 'low end' furnaces; i.e. furnaces that do not have a concentrated flame.

The fluff can be pelletized to improve transport and handling properties. Pellets can be easily transported over long distances, and can be used as whole pellets in certain fuel applications, or can be milled before being used as fuel. Generally, the pellets, or milled pellets can be used as partial replacement of primary fuel (coal, peat or oil). However, it has been extremely difficult to provide alternative fuel that can be easily transported, used without further milling, and used in high end furnaces, preferably to fully replace primary fuel.

Furthermore, currently, the alternative fuels need additional investments in one or more of adapted burners, adapted distribution systems, grinders etc.

Firing an industrial furnace is a process used for example in the production of electricity. The furnaces for producing electricity are the most demanding and efficient furnaces currently in use. Other industrial furnaces that require high process stability are blast furnaces in steel production, cement kilns and lime kilns.

A furnace generally is supplied with powdery (pulverized) coal, oil or gas (as primary fuel). The fuel generally is supplied through a number of burners, lances (or tuyeres). In case the furnace is used to produce electricity, the heat of the combustion is used to produce steam, which is used to drive turbines.

The amount of pulverized coal that can be injected depends on the coal and coke quality, furnace geometry, and operational practices. Furthermore, the pulverized coal has a low bulk density and bad storage characteristics. Coal therefore is pulverized just before use. A main disadvantage of pulverized coal is the fact that it is from a non-renewable source and therefore causing substantial CO₂ emission.

Alternative fuels, or secondary fuels, are to a certain extend also used, to reduce the burden of CO₂ emission. Such alternative fuels need to allow their use in seamless processing. The alternative fuels should be transportable, before and after milling. Further, the alternative fuels need to allow injection in the flame where they need to show good burning characteristic (time to fully burn, burn virtually complete in the hot spot).

Alternative fuels suggested to be used for the high-end industrial furnaces are plastic pellets, mixed plastic/biomass pellets, wood pellets, sewage sludge pellets and the like.

One advantage of using plastic-only waste generally is that plastic waste has low thermal conductivity and high energy content. A disadvantage of using plastics-only waste is that such mixtures originating, for example, from domestic, urban or municipal waste are relatively valuable products that can be used to make (recycled) plastic products. A further disadvantage is, that despite a high calorific value, the waste plastic pellets are difficult to process in such a way that a suitable particle size distribution is obtained. Milling causes temperature increase, rubbery behavior of the plastics to such an extent that cryogenic milling is necessary. Cryogenic milling is however too expensive.

A disadvantage of in particular mixed plastic/biomass pellets is, that the pellets need to be ground near the furnace, as the powder flow properties of ground pellets are such, that transport from a mill to a bulk transport container, subsequently to a bulk storage container, and subsequently for use, causes substantial processing problems. In particular, pipes get blocked, because the powder has a substantial amount of fibrous materials causing clumps or tufts. Therefore, pellets are transported to the furnaces, and a milling operation is done just before transport to a furnace.

Wood pellets have a relatively low energy content, and are therefore less attractive for high end burners. Furthermore, the use of wood pellets is increasingly suspect of not being environmentally friendly as forests are cut, while drying and transporting requires substantial energy. Sludge pellets have in addition to wood pellets an even lower energy content and a relatively high ash content which is a disadvantage.

Alternative fuels are used in practice only to partly replace fossil fuel in high end furnaces. Generally, in actual practice, the amount of alternative fuel is less than 30%, but in any case less than 50% relative to the powdered coal. The powdered coal is a relatively homogeneous material, and a substantial base load of coal attenuates fluctuations in the waste derived pellet materials.

WO2020/127473 describes a process for making pellets that can be ground to particulate material that allows to fire a high-end furnace for 100% with alternative fuel.

Yet, there is an ongoing need for a process in which alternative fuel is in a form that can be easily used by companies having a furnace, without the need of having a mill nearby. In particular, there is a need for powdery alternative fuel, that can be blown through transporting pipes multiple times, without causing clogging and which allows even distribution to multiple burners.

### SUMMARY OF THE INVENTION

The object of the present invention is to provide a powdery alternative fuel that can be transported via bulk transportation and through pipes by blowing gas, without clogging, and that can be used to reliably replace fossil fuel in all furnaces, including high end industrial furnaces used in modern equipment for example for producing electricity, cement or lime kilns or blast furnaces.

In a first aspect, the invention relates to a process to produce pellets from municipal and/or other waste, which pellets are capable of being ground to provide free flowing powdery fuel suitable for transport, the process comprising the following steps:
- (i) providing waste material comprising one or more thermoplastic material(s) of more than 40%, based on the total dry weight of the waste and one or more cellulosic material(s) of more than 30%, based on the total dry weight of the waste, wherein the waste which is provided to step (ii) has a particle size distribution with more than 80% larger than 5 mm and more than 95% smaller than 60 mm, and more than 90 wt% smaller than 40 mm, having a water content of about 8 wt% or less;
- (ii) subjecting the waste material through a pelletiser with holes between 4-8 mm, preferably 4-6 mm, and a length ratio of more than 10, such that the output temperature is about 85 °C or lower,
- (iii) subjecting the pellets through a second pelletiser with holes between 2 and 8 mm, preferably 4-6 mm, and a length ratio of more than 14, such that the output temperature is about 110 °C or higher;
- (iv) to provide pellets with a diameter between 2 and 8 mm, and a length of about 3 mm or longer, preferably longer than 8 mm, wherein the output temperature of the pellets is 110-130 °C;
- (v) cooling said pellets to a temperature below 40 °C, preferably below 30 °C.

The second aspect of the invention provides for milling said pellets, after cooling, for example in a hammer mill, such that a powder is obtained that shows good flow properties.

A further aspect of the present invention relates to powdery alternative fuel having the following properties:
- substantial homogeneous mixture of 40-70 wt% largely molten thermoplastic material and 30-50 wt% of one or more cellulosic materials;
- a particle size distribution such that more than 50 wt% of the particles is between 1 and 3.5 mm, while more than 60 wt% is smaller than 2 mm;
- an angle of repose between 41-43 °;
- a bulk density (tapped) of about 220 g/L or higher.

The powdery alternative fuel unexpectedly can be transported through blowing pipes in bulk containers and the like, without causing blockages or processing problems.

This powdery alternative fuel can completely replace powdered coal in industrial furnaces such as furnaces used in cement kilns, plants to produce electricity and blast furnaces. It is also possible to only partly replace powdered coal in said applications, as such choice may be based on simple economics. Dosing can be achieved using existing equipment which is installed for coal/lignite, and distribution to one or more burners generally would not need an additional investment.

Further benefits and advantages of the present invention will become apparent in the detailed description.

### DETAILED DESCRIPTION

In a first aspect, the invention relates to a process to produce pellets comprising the following steps:
(i) providing waste material comprising one or more thermoplastic material(s) of more than 40%, based on the total dry weight of the waste and one or more cellulosic material(s) of more than 30%, based on the total dry weight of the waste, wherein the waste which is provided to step (ii) has a particle size distribution with more than 80 wt% larger than 5 mm and more than 95 wt% smaller than 60 mm, and more than 90 wt% smaller than 40 mm, having a water content of about 8 wt% or less;
(ii) subjecting the waste material through a pelletiser with holes between 4-8 mm, and a length ratio of more than 10, such that the output temperature is about 85 °C or lower,
(iii) subjecting the pellets through a second pelletiser with holes between 2 and 8 mm, and a length ratio of more than 14, such that the output temperature is about 110 °C or higher;
(iv) to provide pellets with a diameter between 2 and 8 mm, and a length of about 3 mm or longer, preferably longer than 8 mm, wherein the output temperature of the pellets is 110-130 °C;
(v) and the pellets are cooled to a temperature of about 40 °C or lower, preferably about 30 °C or lower.

### Waste material

By the term "thermoplastic material" is meant thermoplastic polymers. The waste material used in the preparation of the pellets of the present invention comprises at least 40% thermoplastic material, preferably at least 45 weight % or at least 50 weight % thermoplastic material, like for example about 55 weight % or about 60 weight % thermoplastic material.

Generally, the amount of plastic material in the pellets is about 80 wt% or less, preferably 70 wt% or less. Hence, suitable ranges comprise 40-80 wt% of plastic, or most preferably 50-70 wt% of plastic.

Examples of thermoplastic polymers used herein are listed in US2010/0116181. Typically, the thermoplastic material or component may be a packaging material or any type of plastic waste.

Preferably, at least 20 weight %, more preferably at least 40 weight %, even more preferably at least 50 weight %, and most preferably at least 60 weight % of the thermoplastic material are polyethylene homo- or copolymers.

The term "cellulosic material" used in the present invention relates to for example paper, cardboard, wood, cardboards, textiles such as cotton, rayon and/or viscose. The waste material used in the present invention comprises at least 30 weight % of cellulosic material, preferably more than 35 weight % or more of cellulosic material. Generally, the amount of cellulosic material is about 60 wt% or less, preferably about 50 wt% or less cellulosic material based on the total dry weight of the pellets. Suitable ranges include 30-60 wt% cellulosic material, preferably 30-50 wt% cellulosic material. Cellulosic material can also be denoted as biomass.

The waste material generally is derived from municipal waste or other waste streams. Mixed plastic/biomass waste (comprising different types of plastics and biomass/paper) generally is considered 'non-recyclable' material, This type of waste material is considered very inhomogeneous, causing considerable difficulties for continuous processing. The process of the invention has transformed the very inhomogeneous material into substantial homogeneous material (in the form pf pellets). Thereby, grinding of the pellets yield ground material, which can be handled in a variety of processing steps.

The pellets can be produced by selecting waste plastic and biomass from refuse or paper recycling plants and the like. It is possible to use different selected waste streams in combination in order to achieve a required mix of plastic and cellulosic materials. The raw material preferably is shredded to a size of 5 cm or less for the largest dimension, preferably to a size of 4 cm or less. In a further embodiment, the raw material is shredded to a size of about 3.5 cm or less, preferably about 2.5 cm.

Preferably, the waste has a particle size distribution with more than 80 wt% larger than 5 mm and more than 95 wt% smaller than 60 mm. Preferably, more than 90 wt% is smaller than 40 mm. In a further preferred embodiment, the waste has a particle size such that about 20 wt% or more has a size of more than 30 mm.

The material is dried to a moisture content of 8 wt% or below, and the material is pressed through a die with appropriate holes. Preferably, the moisture content of the material fed to the first die is between about 2% and about 5%. A too high moisture content can prevent sufficient melting of the plastic, because - it is thought - that the temperature cannot sufficiently rise to cause sufficient melting of the plastic.

Drying is preferably done after shredding.

The temperature of the material fed to the first die is preferably between about 30 - 50 °C, preferably between about 35 - 45 °C.

### Pelletizing

As used herein, the term "pellet" or "pellets" is used when referring to pellets of the present invention comprising one or more thermoplastic material(s) and one or more cellulosic material(s). The pellets are not limited by a degree of inhomogeneity.

The die of the pelletiser preferably is a cylindrical die, but flat dies are known, and can be used as well. Also, a first flat and second cylindrical die can be used, or first a cylindrical and secondly a flat die.

Preferably, the hole diameter in the first and/or second pelletizer is 4, 5 or 6 mm.

Preferably, the diameter to thickness ratio of the first die is between 10-16, preferably between 12-14.

Preferably, the diameter to thickness ratio of the second die is between 14 and 20, preferably between 16-20.

The preferred diameter to thickness ratio's allow smooth operation, also with respect to the temperature of the output of each die.

Preferably, the first die is operated such that the temperature of the output (pellet) is between 60 and 80 °C.

Generally, a buffer vessel will be present between the first and the second pelletizer, to ease operation. Preferably, the buffer vessel has means for measurement of the level of pellets, and the temperature of the pellets. The buffer vessel preferably is isolated and/or comprises heating means to keep the pellets on a required temperature, as described below.

The temperature of the material fed to the second die preferably is between about 50 - 80 °C, more preferably between about 60 - 75 °C.

Preferably, the second die is operated such that the temperature of the output (pellet) is between 110 and 130 °C. It is preferred that the output temperature is between 115-125 °C, like for example about 120 °C.

Preferably, the temperature increase of the output of the first die and the output of the second die is about 40 °C or more, preferably about 45 °C or more. This allows proper melting of the plastic in the second die, without becoming overly sticky.

### Pellets

Pellets have a uniform size range (diameter) generally within a range of 4 - 8 mm, preferably 6-8 mm, and most preferably about 6 mm. The length of the pellets generally will be between 3 and 50 mm, preferably longer than 8 mm, and more preferably 10-40 mm, and even more preferably between 15-25 mm.

The heating value or calorific value or calorific heating value of any fuel is the energy released per unit mass or per unit volume of the fuel when the fuel is completely burnt. The quantity is determined by bringing all the products of combustion back to the original pre-combustion temperature, and in particular condensing any vapor produced. With other words, it is the amount of heat released during the complete combustion of a specified amount of it.

Calorimetry measures the higher heating value (HHV) and uses the following procedure. It fully combusts the sample using pure oxygen and then produces carbon dioxide and water. The water is initially produced as a vapor. However, once the entire sample is combusted (i.e., the test is complete) the water vapor condenses. This condensation process releases additional heat. Technically this additional heat is latent heat from the conversion of water from a vapor to a liquid phase. The combination of the heat released during the combustion of the sample and the subsequent heat released during the conversion of water vapor to liquid provides the maximum heat that can be obtained. This is known as Higher calorific value (HCV) or Higher heating value (HHV).

If the process maintains the water produced in the vapor state, then the latent heat is not recovered. This is known as the Lower calorific value (LCV) or Lower heating value (LHV). The LHV is only the heat of combustion and does not include the heat released during condensation of the water vapor. LHV is the key measurement for most combustion systems that convert heat to power or energy.

The HHV and LHV are valid for complete combustion of the fuel to CO₂ and H₂O.

The calorific value (LCV) of the pellets is generally about 19-28 GJ/ton, which is lower than full plastic material, which generally has a calorific value of 31-35 GJ/ton (on dry weight).

Preferably, halogen elements like chlorine are present in the pellets in an amount below 1 wt%, more preferably below 0.3 wt%. High input of this elements may lead to corrosion in the dry and/or wet gas cleaning system and in addition to chlorine emission with the drain water of the top gas scrubber.

The oxygen content of the pellets is preferably in the range of 20 to 30 w% of the dry weight pellets.

The hydrogen content of the pellets is preferably in the range of 6 to 8 w% of the dry weight pellets.

Preferably, the pellets may comprise up to 5 weight % of moisture. The amount of moisture may be below 2 or below 1 %.

Preferably, the strength of the pellets is about 10 kgf or more, more preferably about 15 kgf or more. Generally, the strength is about 40 kgf or less, often about 25 kgf or less. It is however possible to have even harder pellets, for example having a strength of up to 70 kgf or less, for example 60 kgf or less. It may be preferably to have a strength of about 30 kgf or less.

Pellets obtained by once pelletizing have a hardness of around 15 kgf, while twice pelletizing with the method of the present invention increased the hardness to more than 20 kgf, such as 22 kgf. The pellets of the present invention most preferably have a hardness between 20 and 25 kgf, as with this hardness, very suitable powder is obtained, of which it appeared that it can be transported over long distances. This powder did not show (or hardly any) problems caused by bad flow behaviour caused by plastic strands, fluffy conglomerates or the like.

The hardness can be measured with a Kahl pellet hardness tester, available from Amandus Kahl GmbH&Co KG, Hamburg. The Kahl pellet hardness tester is one of the standard test methods in the industry.

A sufficient strength furthermore has the advantage that the pellets have a relatively high density, which allows efficient transport of the pellets as such. Also, the strength precludes the formation of large amounts of fines during the transport.

These pellets unexpectedly allow bulk transportation of powdery alternative fuel, after milling of the pellets

The pellets which are obtained according to the present invention, have a high bulk density. The pellets according to the present invention generally have a bulk density of 500 g/L, preferably 520 g/L or higher, and even more preferably about 540 g/L or higher, like for example about 550 g/L. Generally, the density is 600 g/L or lower.

Preferably, the pellets have a bulk density of 540 g/L or higher.

### Grinding and powdery alternative fuel

The pellets can be ground in a hammer mill (like for example a California pellet mill; 11.5x28 having a 6.4 mm or 3.5 mm screen and a tip speed of 108 m/s).

Pellets according to WO2020/127473 are described to be ground over a 6.4 mm screen. Smaller screen sizes may cause the grinding of such pellets to produce too much fluffy material, or tuft, causing reduced transportability. Yet, the pellets according to the present invention can be milled over a 3.5 mm screen, and still produce powder that can be transported easily, without blocking.

The pellets obtained or obtainable with the process of the present invention can be milled in a hammer mill such that the powder shows good flow properties, and such that preferably 30-60% wt% of the powder has a particle size between 1 and 2 mm, and more than 80% is less than 2 mm.

The resulting particles have preferably a bulk density (tapped) of 220 g/L or higher.

The pellets, when ground in a hammer mill, contain virtually no strand-like material that causes tuft formation in contrast to once pelletized material. Tuft formation appears detrimental for flow properties.

The pellets are ground to relatively small particles of below 3.15 mm. Generally, the weight percentage of particles larger than 3.15 mm is about 15 wt% or less, preferably about 10 wt% or less and even more preferably about 7.5 wt% or less.

More preferably, more than 95 wt%, more preferably more than 98 wt% of the ground material is smaller than 5mm. Yet, the particles are not dusty.

The (tapped) bulk density is measured as follows: an amount of pellets is poured in a 100 mL cylinder (diameter 2.5 cm), and measuring the amount of pellets present in gram. Tapping is done by placing the beaker on a vibrating surface (0.5 mm vertical vibration; 240 times per minute) for 5 min; and measuring the volume of pellets. The tapped density is the amount in gram amount divided by the volume measured.

The grinding is tested in a hammer mill (California pellet mill; 11.5x28) having a screen with holes of 3.5 mm diameter, and a tip speed of 108 m/s, used according the manufacturers description.

The bulk density (tapped) of the ground pellets (the particulate material) generally is 220 g/L or higher, preferably 230 g/L or higher.

Preferably, the average particle size of the ground particles is less than 2.5 mm, and preferably larger than 1 mm.

The angle of repose of the material obtained with twice pelletizing, and suitable for transport, has a distinct angle of repose, which is higher than the angle of repose of fluff or ground pellets obtained with pelletizing through one die. The angle of repose has been measured in two ways. The first was pouring 500 gram of material through a funnel with a distance to a table of 20 cm, and a width of the funnel outlet of 3 cm diameter. The material forms a small heap, of which the height and diameter can be measured. The angle calculated from the height, and the radius can be used as angle of repose. The second method is a tilting table method, in which table on which the material is present in a thin layer is slowly tilted till the material starts moving. The angle at which the material start moving is the angle of repose.

Results of the two methods are presented in the next table:

| material | Angle of repose from height/radius | Angle of repose from tilted table (range) | Range |
|---|---|---|---|
| Fluff | 40° | 35 - 40° | 35-40° |
| Once pelletized | 39° | 39 - 40° | 39-40° |
| Twice pelletized | 41° | 42 - 42° | 41-42° |

The invention is also related to powdery alternative fuel, having the following properties:
- Substantial homogeneous mixture of 40-70 wt% largely molten thermoplastic material and 30-50 wt% of one or more cellulosic materials;
- A particle size distribution such that more than 50 wt% of the particles is between 1 and 3.5 mm, while more than 60 wt% is smaller than 2 mm;
- An angle of repose between 41-43 °;
- A bulk density (tapped) of about 220 g/L or higher.

The grinding in an industrial setting generally takes place in a suitable mill, such as a hammer mill, jet mill or the like. Preferably, a hammer mill is used.

### Transporting

The powdery alternative fuel unexpectedly can be transported through blowing pipes in bulk containers and the like, without causing processing problems. Transport through blowing can be done using gas. The gas can be any suitable gas, like preferably air or carbon dioxide-rich gas like flue gas. Furthermore, conveyer belts can be used, without processing problems.

It is also disclosed a transport container for road, train or boat traffic, having about 1 tonnes or more, preferably about 3 tonnes or more, bulk powdery alternative fuel as described herein.

Transport containers are well known, and preferably are standard containers, like bulk carriers for road transport, bulk carriers that can be placed in ships, on rail transport, or container carriers for road transport. For example, 90 m³ walking floor containers can be used, which can be filled through a conveyor, and emptied via a conveyor or with blowing equipment. Further, 60-65 to 90 m³ silo containers are available that can be filled/emptied for example through blowing pipes. For example 6 m tank-type of containers can be used with a nominal loading capacity of about 26 tonnes. With a bulk density of e.g. 220 kg/ton, about 5.5-6 tonnes of material can be loaded in such a container. 12 m containers can be loaded with the double amount. The transport containers preferably contain between about 5 to 20 tonnes of material.

The transport container can for example also be a whole ship with bulk capacity of up to 20,000 ton.

It is furthermore disclosed a method of transporting alternative fuel, wherein bulk powdery alternative fuel as described herein is moved for at least one kilometer in a transport container for road, train or boat traffic, the container having about 1 ton or more, preferably about 3 tonnes or more of bulk powdery alternative fuel.

The pulverized alternative fuel can be blown from the transport vehicle into a bulk silo near the furnace which will use the fuel.

### Use

This powdery alternative fuel can completely replace powdered coal in industrial furnaces such as furnaces used in cement kilns, in lime kilns, plants to produce electricity and blast furnaces. It is also possible to only partly replace powdered coal in said applications, as such choice may be based on simple economics. Dosing can be achieved using existing equipment which is installed for coal/lignite, and distribution to one or more burners generally would not need an additional investment.

The particles preferably are blown into the flame of an industrial furnace at an adiabatic flame temperature in the range of about 1200 °C to about 2500 °C and air volume in the range of 1280-2000 Nm³/kg*1000. The temperature is generally dependent on the type of industrial furnace.

Hereinafter, the present invention is described in more detailed and specifically with reference to the examples, which however are not intended to limit the present invention.

### EXAMPLES

### Examples 1-2

A series of tests have been conducted with RDF comprising about 48% plastic, about 42% biomass, about 6% other materials and about 4% moisture.

First pelletizing step was done through a die having 6 mm holes and a length of 72 mm (aspect ratio 12). The die speed was about 200 rpm, and the pellets obtained after the first pelletizing step had a temperature of about 70 °C.

The second pelletizing step was performed immediately after the first, such that the entrance temperature of the products entering the pelletizer had a temperature of about 50-60 °C. The second pelletizer used a die with hole of 6 mm diameter, and a lengths of 102 mm (a ratio of 17). The exit temperature of the pellets of a length of about 25-35 mm was about 120 °C.

The twice pelletised pellets had a bulk density of about 520 g/L. Grinding was done with a hammer mill (vertical spindle mill at a speed of 108Hz) with a screen with a QJ3,5mm holes.

The products of examples 1 and 2 have been analysed for particle size distribution according to the methods DIN 18123: 2011-04 and DIN-EN 15149-1&-2: 2011-01. Sieve fractionating over 0.5 mm, 1 mm, 2 mm, 3.5 mm and >3.5 mm yielded the following results:

| Size distribution (wt%) | Example 1 | | Example 2 | |
|---|---|---|---|---|
| | Wt% | cumulative | Wt% | Cumulative |
| Fraction < 0.5 mm | 17 | 17 | 13 | 13 |
| Fraction 0.5 - 1 mm | 13 | 30 | 29 | 42 |
| Fraction 1-2 mm | 32 | 62 | 43 | 85 |
| Fraction 2-3.5 mm | 23 | 85 | 8 | 93 |
| Fraction > 3.5 mm | 15 | 100 | 7 | 100 |

From these results it appears that grinding double pelleted pellets on a Hammer mill with a screen with QJ3,5mm holes showed a particle size of more than 50% of particles between 1 and 3.5 mm, and more than 60 wt% smaller than 2 mm.

### Example 3

The product from example 2 was prepared in an amount of 50 tonnes, About three tonnes of product was blown into a bulk trailer, transported over 50 km, and emptied again with pressurized air through a pipe. All product could be loaded and unloaded by simple compressed air using a standard bulk transport system.

## Claims

1. Method to produce pellets comprising the following steps:
(i) providing waste material comprising one or more thermoplastic material(s) of more than 40%, based on the total dry weight of the waste and one or more cellulosic material(s) of more than 30%, based on the total dry weight of the waste, wherein the waste which is provided to step (ii) has a particle size distribution with more than 80 wt% larger than 5 mm, more than 95 wt% smaller than 60 mm and more than 90% smaller than 40 mm, having a water content of 8 wt% or less;
(ii) subjecting the waste material through a pelletiser with holes between 4-8 mm, and a length ratio of more than 10, such that the output temperature is 85 ºC or lower,
(iii) subjecting the pellets through a second pelletiser with holes between 2 and 8 mm, and a length ratio of more than 14, such that the output temperature is 110 ºC or higher;
(iv) to provide pellets with a diameter between 2 and 8 mm, and a length of about 3 mm or longer, preferably longer than 8 mm, wherein the output temperature of the pellets is 110-130 ºC;
(v) and the pellets are cooled to a temperature of 40 ºC or lower, preferably 30 ºC or lower.

2. Method according to claim 1, wherein the moisture content of the material fed to the first die is between 2% and 5%.

3. Method according to any one of claims 1-2, wherein the hole diameter in the first and/or second pelletizer is 4-6 mm.

4. Method according to any one of claims 1-3, wherein the diameter to thickness ratio of the first die is between 10-16, preferably between 12-14.

5. Method according to any one of claims 1-4, wherein the diameter to thickness ratio of the second die is between 14 and 20, preferably between 16-20.

6. Method according to any one of claims 1-5, wherein the first die is operated such that the temperature of the output is between 60 and 80 ºC.

7. Method according to any one of claims 1-6, wherein the second die is operated such that the temperature of the output is between 115-125 ºC.

8. Method according to any one of claims 1-7, wherein the temperature increase of the output of the first die and the output of the second die is 40 ºC or more, preferably 45 ºC or more.

9. Method according to any one of claims 1-8, wherein the temperature of the material fed to the first die is between 30 - 50 °C, preferably between 35 - 45 °C.

10. Method according to any one of claims 1-9, wherein the temperature of the material fed to the second die is between 50 - 80 °C, preferably between 60 - 75 °C.

11. Method for providing powdery alternative fuel by milling pellets obtainable by any one of claims 1-10.

12. Method according to claim 11, wherein milling is performed in a hammer mill, jet mill, roller or ball mil, preferably a hammer mill

13. Powdery alternative fuel, having the following properties:
a. substantial homogeneous mixture of 40-70 wt% largely molten thermoplastic material and 30-50 wt% of one or more cellulosic materials;
b. a particle size distribution such that more than 50 wt% of the particles is between 1 and 3.5 mm, while more than 60 wt% is smaller than 2 mm;
c. an angle of repose between 41-43 ° measured with the tilting table method;
d. a bulk density (tapped) of 220 g/L or higher wherein tapping is done by placing the beaker on a vibrating surface with 0.5 mm vertical vibration and 240 times per minute for 5 min.

14. Powdery alternative fuel according to claim 13, having a bulk density (tapped) of 230 g/L or higher.

15. Powdery alternative fuel according to any one of claims 13-14, wherein the average particle size of the ground particles is less than 2.5 mm, and preferably larger than 1 mm.

## Patentansprüche

1. Verfahren zum Herstellen von Granulat, umfassend die folgenden Schritte:
(i) Bereitstellen von Abfallmaterial, das ein oder mehrere thermoplastische Materialien von mehr als 40 %, basierend auf dem Gesamttrockengewicht der Abfälle, und ein oder mehrere zellulosehaltige Materialien von mehr als 30 %, basierend auf dem Gesamttrockengewicht der Abfälle, umfasst, wobei die Abfälle, die für Schritt (ii) bereitgestellt werden, eine Partikelgrößenverteilung von mehr als 80 Gewichtsprozent größer als 5 mm, mehr als 95 Gewichtsprozent kleiner als 60 mm und mehr als 90 % kleiner als 40 mm aufweisen, wobei sie einen Feuchtigkeitsgehalt von 8 Gewichtsprozent oder weniger aufweisen;
(ii) Aussetzen der Abfälle an einen Granulator mit Löchern zwischen 4 und 8 mm und einem Längenverhältnis von mehr als 10, so dass die Ausgabetemperatur 85 °C oder weniger beträgt,
(iii) Aussetzen des Granulats an einen zweiten Granulator mit Löchern zwischen 2 und 8 mm und einem Längenverhältnis von mehr als 14, so dass die Ausgabetemperatur 110 °C oder mehr beträgt;
(iv) Bereitstellen von Granulat mit einem Durchmesser von 2 bis 8 mm und einer Länge von ungefähr 3 mm oder mehr, bevorzugt länger als 8 mm, wobei die Ausgabetemperatur des Granulats 110 bis 130 °C beträgt;
(v) und Abkühlen des Granulats auf eine Temperatur von 40 °C oder weniger, bevorzugt auf 30 °C oder weniger.

2. Verfahren nach Anspruch 1, wobei der Feuchtigkeitsgehalt des Materials, das der ersten Pressmatrize zugeführt wird, zwischen 2 % und 5 % liegt.

3. Verfahren nach einem der Ansprüche 1 bis 2, wobei der Lochdurchmesser in dem ersten und/oder dem zweiten Granulator 4 bis 6 mm beträgt.

4. Verfahren nach einem der Ansprüche 1 bis 3, wobei das Durchmesser/Dicke-Verhältnis der ersten Pressmatrize zwischen 10 und 16, bevorzugt zwischen 12 und 14, liegt.

5. Verfahren nach einem der Ansprüche 1 bis 4, wobei das Durchmesser/Dicke-Verhältnis der zweiten Pressmatrize zwischen 14 und 20, bevorzugt zwischen 16 und 20 liegt.

6. Verfahren nach einem der Ansprüche 1 bis 5, wobei die erste Pressmatrize derart betätigt wird, dass die Ausgabetemperatur zwischen 60 und 80 °C liegt.

7. Verfahren nach einem der Ansprüche 1 bis 6, wobei die zweite Pressmatrize derart betätigt wird, dass die Temperatur der Ausgabe zwischen 115 und 125 °C liegt.

8. Verfahren nach einem der Ansprüche 1 bis 7, wobei der Temperaturanstieg der Ausgabe der ersten Pressmatrize und der Ausgabe der zweiten Pressmatrize 40 °C oder mehr, bevorzugt 45 °C oder mehr, beträgt.

9. Verfahren nach einem der Ansprüche 1 bis 8, wobei die Temperatur des Materials, das der ersten Pressmatrize zugeführt wird, zwischen 30 bis 50 °C, bevorzugt zwischen 35 und 45 °C, liegt.

10. Verfahren nach einem der Ansprüche 1 bis 9, wobei die Temperatur des Materials, das der zweiten Pressmatrize zugeführt wird, zwischen 50 und 80 °C, bevorzugt zwischen 60 und 75 °C, liegt.

11. Verfahren zum Bereitstellen eines pulverförmigen alternativen Brennstoffs durch Mahlen von Granulat, das durch einen der Ansprüche 1 bis 10 erzielt werden kann.

12. Verfahren nach Anspruch 11, wobei das Mahlen in einer Hammermühle, einer Strahlmühle, einer Walzen- oder Kugelmühle, bevorzugt in einer Hammermühle, erfolgt.

13. Pulverförmiger alternativer Brennstoff, mit folgenden Eigenschaften:
a) einem im Wesentlichen homogenen Gemisch aus 40 bis 70 Gewichtsprozent eines weitgehend geschmolzenen thermoplastischen Materials und aus 30 bis 50 Gewichtsprozent eines oder mehrerer zellulosehaltiger Materialien;
b) einer derartigen Partikelgrößenverteilung, dass mehr als 50 Gewichtsprozent der Partikel zwischen 1 und 3,5 mm liegen, während mehr als 60 Gewichtsprozent kleiner als 2 mm sind;
c) einem Schüttwinkel zwischen 41 und 43°, der mit dem Kipptischverfahren gemessen wird;
d) eine (geklopfte) Fülldichte von 220 g/L oder mehr, wobei das Klopfen erfolgt, in dem ein Becherglas auf eine Rüttelfläche mit einer vertikalen Schwingung von 0,5 mm und 240mal pro Minute für 5 Minuten gestellt wird.

14. Pulverförmiger alternativer Brennstoff nach Anspruch 13, mit einer (geklopften) Fülldichte von 230 g/L oder mehr.

15. Pulverförmiger alternativer Brennstoff nach einem der Ansprüche 13 bis 14, wobei die durchschnittliche Partikelgröße der gemahlenen Partikel kleiner als 2,5 mm und bevorzugt größer als 1 mm ist.

## Revendications

1. Procédé permettant de produire des granulés, comprenant les étapes suivantes consistant à :
(i) fournir des déchets comprenant une ou plusieurs matière(s) thermoplastique(s) de plus de 40 %, sur la base du poids sec total des déchets, et une ou plusieurs matière(s) cellulosique(s) de plus de 30 %, sur la base du poids sec total des déchets, dans lequel les déchets qui sont fournis à l'étape (ii) présentent une distribution de taille de particule avec plus de 80 % en poids supérieurs à 5 mm, plus de 95 % en poids inférieurs à 60 mm et plus de 90 % inférieurs à 40 mm, ayant une teneur en eau de 8 % en poids ou moins ;
(ii) soumettre les déchets à un granulateur avec des trous compris entre 4 à 8 mm et un rapport de longueur de plus de 10, de sorte que la température de sortie est de 85 °C ou moins,
(iii) soumettre les granulés à un second granulateur avec des trous compris entre 2 et 8 mm et un rapport de longueur de plus de 14, de sorte que la température de sortie est de 110 °C ou plus ;
(iv) fournir des granulés d'un diamètre compris entre 2 et 8 mm et d'une longueur d'environ 3 mm ou plus, de préférence plus longue que 8 mm, dans lequel la température de sortie des granulés est de 110 à 130 C ;
(v) et refroidir les granulés à une température de 40 °C ou moins, de préférence à 30 °C ou moins.

2. Procédé selon la revendication 1, dans lequel la teneur en humidité de la matière alimentée à la première matrice est comprise entre 2 % et 5 %.

3. Procédé selon l'une quelconque des revendications 1 à 2, dans lequel le diamètre de trou dans le premier et/ou le second granulateur est de 4 à 6 mm.

4. Procédé selon l'une quelconque des revendications 1 à 3, dans lequel le rapport diamètre/épaisseur de la première matrice est compris entre 10 et 16, de préférence entre 12 et 14.

5. Procédé selon l'une quelconque des revendications 1 à 4, dans lequel le rapport diamètre/épaisseur de la seconde matrice est compris entre 14 et 20, de préférence entre 16 et 20.

6. Procédé selon l'une quelconque des revendications 1 à 5, dans lequel la première matrice est actionnée de telle sorte que la température de sortie des granulés est comprise entre 60 et 80 °C.

7. Procédé selon l'une quelconque des revendications 1 à 6, dans lequel la seconde matrice est actionnée de telle sorte que la température de sortie des granulés est comprise entre 115 et 125 °C.

8. Procédé selon l'une quelconque des revendications 1 à 7, dans lequel l'augmentation de la température de sortie des granulés de la première matrice et de sortie des granulés de la seconde matrice est de 40 °C ou plus, de préférence de 45 °C ou plus.

9. Procédé selon l'une quelconque des revendications 1 à 8, dans lequel la température de la matière alimentée à la première matrice est comprise entre 30 et 50 °C, de préférence entre 35 et 45 °C.

10. Procédé selon l'une quelconque des revendications 1 à 9, dans lequel la température de la matière alimentée à la seconde matrice est comprise entre 50 et 80 °C, de préférence entre 60 et 75 °C.

11. Procédé permettant de fournir un combustible alternatif pulvérulent en broyant des granulés pouvant être obtenues par l'une quelconque des revendications 1 à 10.

12. Procédé selon la revendication 11, dans lequel le broyage est effectué dans un broyeur à marteaux, un broyeur à jets, un broyeur à cylindres ou à billes, de préférence un broyeur à marteaux.

13. Combustible alternatif pulvérulent, ayant les propriétés suivantes :
a) un mélange substantiellement homogène de 40 à 70 % en poids de matière thermoplastique largement fondue et de 30 à 50 % en poids d'une ou de plusieurs matières cellulosiques ;
b) une distribution de taille de particule de sorte que plus de 50 % en poids des particules sont compris entre 1 et 3,5 mm, alors que plus de 60 % en poids sont inférieurs à 2 mm ;
c) un angle de talutage compris entre 41 à 43° mesuré avec la méthode de la table inclinable ;
d) une densité apparente (tassée) de 220 g/L ou plus, le tassement étant effectué en plaçant un bécher sur une surface vibrante avec une vibration verticale de 0,5 mm et 240 fois par minute pendant 5 minutes.

14. Combustible alternatif pulvérulent selon la revendication 13, ayant une densité apparente (tassée) de 230 g/L ou plus.

15. Combustible alternatif pulvérulent selon l'une quelconque des revendications 13 à 14, dans lequel la dimension de particule moyenne des particules broyées est inférieure à 2,5 mm, et de préférence supérieure à 1 mm.
